(19) Europäisches Patentamt
European Patent Office
Office européen des brevets

(11) **EP 4 318 424 B1**

(12) **EUROPEAN PATENT SPECIFICATION**

(45) Date of publication and mention
of the grant of the patent:
**02.07.2025 Bulletin 2025/27**

(21) Application number: **23186825.8**

(22) Date of filing: **20.07.2023**

(51) International Patent Classification (IPC):
***G08B 17/10*** *(2006.01)* ***G08B 29/24*** *(2006.01)*

(52) Cooperative Patent Classification (CPC):
**G08B 17/10; G08B 29/24**

(54) **FILTER LIFE PREDICTION FOR AN ASPIRATING SMOKE DETECTOR**

FILTERLEBENSDAUERVORHERSAGE FÜR EINEN ANSAUGRAUCHDETEKTOR

PRÉDICTION DE DURÉE DE VIE DE FILTRE POUR UN DÉTECTEUR DE FUMÉE À ASPIRATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.08.2022 US 202217878344**

(43) Date of publication of application:
**07.02.2024 Bulletin 2024/06**

(73) Proprietor: **Honeywell International Inc.**
**Charlotte, NC 28202 (US)**

(72) Inventors:
• **KUMAR, Navneet**
**Charlotte, 28202 (US)**
• **DHARMARAJAN, Aakash**
**Charlotte, 28202 (US)**
• **RAI, Aman**
**Charlotte, 28202 (US)**
• **SANDEEP, Deepika**
**Charlotte, 28202 (US)**
• **CHANDRA MOHAN, Ananda Vel Murugan**
**Charlotte, 28202 (US)**
• **CHANG, Hisao M.**
**Charlotte, 28202 (US)**

(74) Representative: **Haseltine Lake Kempner LLP**
**Cheapside House**
**138 Cheapside**
**London EC2V 6BJ (GB)**

(56) References cited:
**US-A1- 2007 176 783 US-A1- 2021 348 987**

## Description

Technical Field

The present disclosure relates to devices, systems, and methods for filter life prediction for an aspirating smoke detector.

Background

Facilities (e.g., buildings), such as commercial facilities, office buildings, hospitals, and the like, can have an alarm system that can be triggered during an emergency situation (e.g., a fire) to warn occupants to evacuate. For example, an alarm system may include a control panel (e.g., a fire control panel) and a plurality of aspirating smoke detectors located throughout the facility (e.g., on different floors and/or in different rooms of the facility) that detect a hazard event, such as smoke generation (e.g., as the result of a fire or otherwise). An aspirating smoke detector can transmit a signal to the control panel in order to notify a building manager, occupants of the facility, emergency services, and/or others of the hazard event via alarms or other mechanisms.

US 2007/176783 A1 describes a filter system for particle detectors. The filter system can be utilized to determine particle transmittance of a filter for use with a smoke detection system in which a detector produces an electrical output indicating the concentration, in the air, of particles produced by smoke or fire. A filter warning for aspirated smoke detection systems can be provided.

Summary

The present invention is defined by the independent claims, to which reference should now be made. Advantageous embodiments are set out in the dependent claims.

Brief Description of the Drawings

Figure 1 is an example of a system for filter life prediction for an aspirating smoke detector, in accordance with one or more embodiments of the present disclosure.
Figure 2 is an example of a flowchart of a method for filter life prediction for an aspirating smoke detector using a machine learning model, in accordance with one or more embodiments of the present disclosure.
Figure 3 is an example of a flowchart of a method for filter life prediction for an aspirating smoke detector using a digital twin model, in accordance with one or more embodiments of the present disclosure.
Figure 4 is an example of a computing device for filter life prediction for an aspirating smoke detector, in accordance with one or more embodiments of the present disclosure.

Detailed Description

Devices, systems, and methods for filter life prediction for an aspirating smoke detector are described herein. In some examples, one or more embodiments include a computing device comprising a memory and a processor to execute instructions stored in the memory to log operational data of the aspirating smoke detector for a first time period to generate an initial data set, fit a machine learning model to the initial data set, and determine, based on the machine learning model, a remaining useful life of the filter.

An aspirating smoke detector can be utilized in a facility to detect a hazard event by detecting the presence of smoke. The aspirating smoke detector can draw gas (e.g., air, via a blower) from the facility into a sensor through a network of pipes throughout the facility. The network of pipes can comprise a pipe sampling network. The sensor can sample the gas from the pipe sampling network in order to determine whether the gas sampled from the facility includes smoke particles. In response to detection of smoke particles, the aspirating smoke detector can transmit a signal to a control panel in the facility to signal detection of smoke particles in the area of the facility the aspirating smoke detector is monitoring and sampling gas from.

During operation of the aspirating smoke detector, a filter included in the aspirating smoke detector can provide cleaned gas for a sampling module and detection chamber to sample the gas for smoke particles. The filter can provide protection for optical surfaces inside the sampling module/detection chamber of the aspirating smoke detector from contamination.

As the aspirating smoke detector is used over time, the filter can become less efficient at cleaning gas for smoke particulate sampling. Accordingly, it can be important to know when to replace the filter to provide for accurate testing.

However, operating conditions for aspirating smoke detectors can vary between different facilities. For example, environmental conditions may be different from facility to facility, such as weather, air conditions (e.g., which may vary as output from different buildings/industrial plants/office buildings can change air conditions in which the aspirating smoke detector is operating), and/or smoke detection events. As a result of such varying conditions, filter life can vary from facility to facility, as a filter in an aspirating smoke detector in a relatively dirty environment can become clogged faster than an aspirating smoke detector in a relatively cleaner environment. Accordingly, determining when to replace the filter can be challenging, as replacing the filter too early can waste valuable filter life, but replacing the filter too late may result in false alarms and/or malfunction of the aspirating smoke detector.

Accordingly, filter life prediction for an aspirating smoke detector according to the present disclosure can allow for accurate prediction of filter life regardless of facility location (e.g., and environmental conditions). Such an approach can allow for more accurate determination of when a filter should be replaced, which can reduce maintenance visits, false alarms, and/or malfunction of the aspirating smoke detector, as compared with previous approaches. Accordingly, maintenance costs for the aspirating smoke detector can be reduced as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

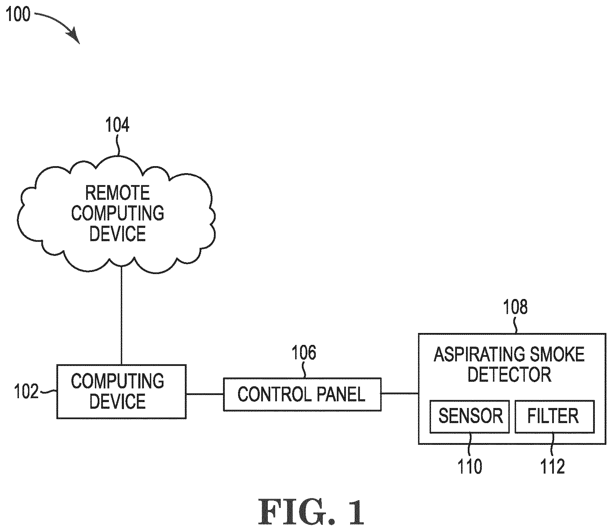

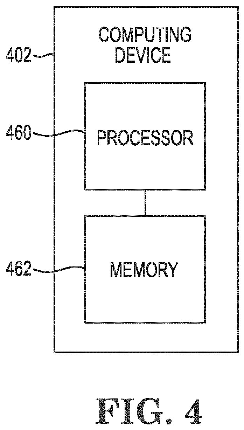

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 402 in Figure 4.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for filter life prediction for an aspirating smoke detector 108, in accordance with one or more embodiments of the present disclosure. The system 100 can include a computing device 102, a remote computing device 104, a control panel 106, and an aspirating smoke detector 108.

As mentioned above, the system 100 can be included in a facility, a space in a facility, etc. The system 100 can include an alarm system. The alarm system can include a plurality of devices in order to detect events and/or process and/or analyze the detected events to determine whether to generate an alarm for occupants of the facility, such as an aspirating smoke detector 108.

As mentioned above, the aspirating smoke detector 108 can draw gas from the facility into a sensor 110 through a network of pipes throughout the facility. As used herein, the term "sensor" refers to a device to detect events and/or changes in its environment and transmit the detected events and/or changes for processing and/or analysis. For example, the sensor 110 can detect whether smoke particles are present in the gas drawn from the facility. The sensor 110 can be, in some examples, an optical sensor that detects light scattered by smoke particles.

As the gas is drawn into the aspirating smoke detector 108, the filter 112 can clean the gas to prevent contamination of the sensor 110. As used herein, the term "filter" refers to a porous device for removing particles from a gas passed through it. For example, the filter 112 may filter out pollutants in the gas drawn through the aspirating smoke detector 108, but allow smoke particles to pass through for detection by the sensor 110.

In response to detection of smoke particles by the aspirating smoke detector 108, the aspirating smoke detector 108 can transmit a signal to the control panel 106. The control panel 106 can be utilized to control various devices included in the alarm system, including the aspirating smoke detector 108.

As illustrated in Figure 1, the control panel 106 is connected to the computing device 102. The computing device 102 can be, for example, a fire system gateway device. The fire system gateway device can be a device that provides a communication link between the control panel 106 (e.g., and the aspirating smoke detector 108) and a remote computing device 104. For example, the fire system gateway device can enable transmission of data from the control panel 106 (e.g., received from the aspirating smoke detector 108) of the facility to a cloud computing platform (e.g., the remote computing device 104), as well as accessibility to the control panel 106 by any peripheral devices (e.g., not illustrated in Figure 1 for clarity and so as not to obscure embodiments of the present disclosure). Additionally, the fire system gateway device can allow for the remote computing device 104 and/or any peripheral devices to access and/or determine information about the aspirating smoke detector 108.

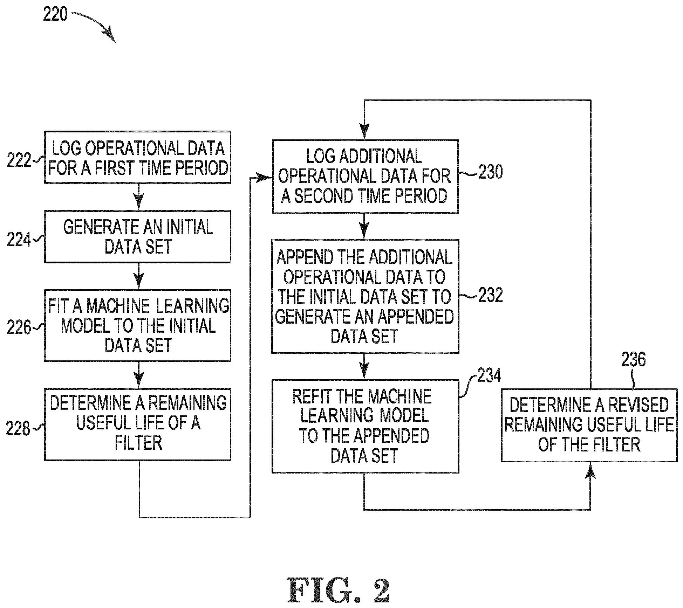

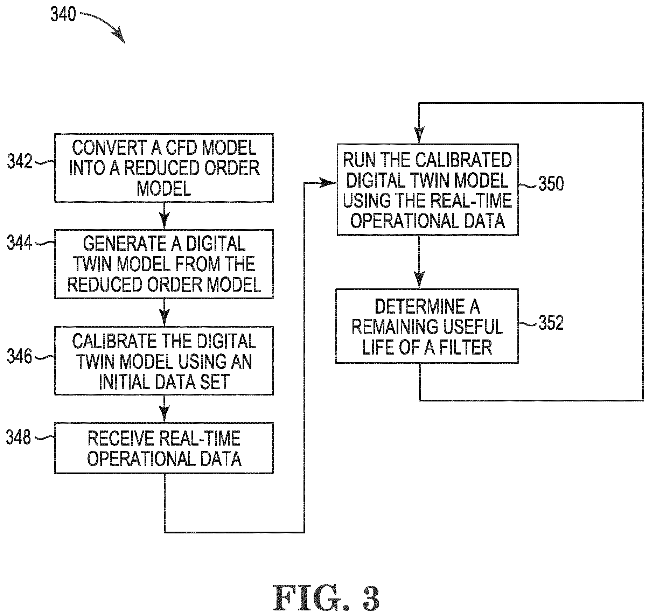

As is further described in connection with Figures 2 and 3, the computing device 102 can determine a predicted remaining useful life of the filter 112. For example, in a first approach, the computing device 102 can determine a first predicted remaining useful life of the filter 112 based on a machine learning model. Additionally, in a second approach, the computing device 102 can determine a second predicted remaining useful life of the filter 112 by running a calibrated digital twin model using real-time operational data of the aspirating smoke detector 108. The computing device 102 can utilize the first predicted remaining useful life and/or the second predicted remaining useful life to generate a predicted remaining useful life of the filter 112. For example, the computing device 102 can determine the remaining useful life of the filter 112 is 10 days (e.g., as a function of a predicted filter life and an amount of days passed from installation of the filter 112). For example, the computing device 102 can determine that the predicted filter life is 100 days and that 90 days have passed since the installation of the filter 112.

As mentioned above, in some examples, the computing device 102 can utilize the first predicted remaining useful life and the second predicted remaining useful life to generate a predicted remaining useful life of the filter 112. For example, the first predicted remaining useful life can be 12 days and the second predicted remaining useful life can be determined to be 10 days. The computing device 102 can determine the remaining useful life of the filter by determining an average between the first predicted remaining useful life and the second predicted remaining useful life. For example, the computing device 102 can determine the remaining useful life of the filter to be 11 days.

As mentioned above, the computing device 102 can determine a first predicted remaining useful life of the filter 112 based on a machine learning model. Such an approach is further described in connection with Figure 2. Additionally, the computing device 102 can determine a second predicted remaining useful life of the filter 112 by running a calibrated digital twin model using real-time operational data of the aspirating smoke detector 108. Such an approach is further described in connection with Figure 3.

Figure 2 is an example of a flowchart of a method 220 for filter life prediction for an aspirating smoke detector using a machine learning model, in accordance with one or more embodiments of the present disclosure. The method 220 can be performed by a computing device and an aspirating smoke detector (e.g., computing device 102 and aspirating smoke detector 108, previously described in connection with Figure 1).

At 222, the computing device can log operational data of the aspirating smoke detector for a first time period. For example, the computing device can log operational data including light scattering data from a sensor included in the aspirating smoke detector. In some examples, such logged operational data may be in a visual studio code (VSC) file format. The computing device can convert such data (e.g., from the VSC file format or any other type of file format) to a comma separated values (CSV) file format.

Based on the amount of light scattering included in the logged operational data, the computing device can determine an amount of filter usage. For instance, based on a first amount of light scattering, the computing device can determine the filter has had 5% of its filter efficacy used up (e.g., corresponding to a particular amount of days, such as 3 days), and based on a second amount of light scattering (e.g., determined from further logged operational data), the computing device can determine the filter has had 7% of its filter efficacy used up (e.g., corresponding to a particular amount of days, such as 5 days). Such operational data can be logged for a first time period (e.g., 7 days) and the computing device can, at 224, generate an initial data set using the logged operational data.

Although the first time period is described above as being 7 days, embodiments of the present disclosure are not so limited. For example, the first time period can be shorter than 7 days (e.g., 6 days) or longer than 7 days.

At 226, the computing device can fit a machine learning model to the initial data set. As used herein, the term "machine learning model" refers to a description of a system using a regression equation. The machine learning model can be a mathematical model such as, for example, a linear regression model or a polynomial model. For example, the computing device can fit a linear polynomial model to the initial data set. Such a machine learning model can be described by Equation 1 below:

$$y = ax + b$$

Equation 1

where y is the time duration for which the filter has been active, x is the filter usage, and a and b are constants where b is error.

For example, the computing device can fit the linear polynomial model to the initial data set to generate a first version of Equation 1 to be y=0.936x+-1.452. At 228, the computing device can determine a remaining useful life of the filter. Utilizing the first version of Equation 1, the computing device can extrapolate a remaining useful life prediction of the filter using the linear polynomial model (e.g., based on the coefficients of the fitted linear polynomial model), where the slope value of the linear polynomial model (e.g., 0.936 in Equation 1) provides an error determination. Such a prediction may be, for example, 80 days of remaining useful life based on the first version of Equation 1. Additionally, in some examples, the computing device can determine the remaining useful life of the filter to include a time range of remaining useful life of the filter (e.g., 70-90 days).

Although the machine learning model is described above as being a linear polynomial model, embodiments of the present disclosure are not so limited. For example, the machine learning model can be a quadratic polynomial model. For example, the computing device can fit a quadratic polynomial model to the initial data set. Such a machine learning model can be described by Equation 2 below:

$$y = ax^2 + bx + c$$

Equation 2

where a, b, and c are constants.

For example, the computing device can fit the quadratic polynomial model to the initial data set to generate Equation 2 to be $y=0.00032*x^2 + -1.10791$. At 228, the computing device can determine a remaining useful life of the filter. Utilizing Equation 2, the computing device can extrapolate a remaining useful life prediction of the filter using the quadratic polynomial model (e.g., based on the coefficients of the fitted quadratic polynomial model), where the constant value of the quadratic polynomial model (e.g., 0.97480 in Equation 2) provides an error determination. Such a prediction may be, for example, 80 days of remaining useful life based on the first version of Equation 2. Additionally, in some examples, the computing device can determine the remaining useful life of the filter to include a time range of remaining useful life of the filter (e.g., 70-90 days).

Although the computing device is described above as fitting a linear polynomial model or a quadratic polynomial model to the initial data set, embodiments of the present disclosure are not so limited. For example, the computing device can fit other machine learning models, such as semi-logarithmic models, among other types of machine learning models.

While the initial data set is described above as having 7 days' worth of data, embodiments of the present disclosure are not so limited. For example, the 7 days' worth of data can be training data to generate an initial prediction for remaining useful life of the filter. However, additional data may be included to generate a more accurate prediction for remaining useful life of the filter, as is further described herein.

At 230, the computing device can log additional operational data of the aspirating smoke detector for a second time period. The second time period can be shorter than the first time period. For example, the second time period can be, for instance, one day. The additional operational data can again include light scattering data from a sensor included in the aspirating smoke detector. Such data can be converted to a CSV file format if necessary.

At 232, the computing device can append the additional operational data to the initial data set. The computing device can then generate an appended data set that includes the logged operational data and the additional operational data.

At 234, the computing device can refit the machine learning model to the appended data set. The computing device can refit the linear polynomial model (e.g., Equation 1) or the quadratic polynomial model (e.g., Equation 2) as described above to the appended data set.

For example, the computing device can fit the linear polynomial model to the appended data set to generate a second version of Equation 1 to be $y=1.00634x+-1.6429$. Utilizing the second version of Equation 1, the computing device can extrapolate a remaining useful life prediction of the filter using the linear polynomial model (e.g., based on the coefficients of the fitted linear polynomial model), where the slope value of the linear polynomial model (e.g., 1.00634 in Equation 1) provides an error determination. Such a prediction may be, for example, 83 days of remaining useful life based on the first version of Equation 1. Additionally, in some examples, the computing device can determine the remaining useful life of the filter to include a time range of remaining useful life of the filter (e.g., 75-87 days).

Additionally, the computing device can repeat steps 230, 232, 234, and 236 to continuously revise the predicted remaining useful life of the filter as additional data is logged from the aspirating smoke detector. Accordingly, as seen above, as the predicted remaining useful life of the filter is continuously revised, the prediction can become more accurate.

In response to the remaining useful life exceeding a threshold amount, the computing device can generate an alert. For example, if the remaining useful life is determined to be 10 days (e.g., which exceeds a threshold amount of days of 15), the computing device can generate an alert. Such an alert may be transmitted to a control panel, to a peripheral device (e.g., a mobile device), etc. in order to notify a user to change the filter in the aspirating smoke detector.

Figure 3 is an example of a flowchart of a method 340 for filter life prediction for an aspirating smoke detector using a digital twin model, in accordance with one or more embodiments of the present disclosure. The method 340 can be performed by a computing device and an aspirating smoke detector (e.g., computing device 102 and aspirating smoke detector 108, previously described in connection with Figure 1).

The computing device utilizes a digital twin model for filter life prediction via method 340, as is further described herein. As used herein, the term "digital twin model" refers to a real-time virtual representation of a physical object. For example, a physical object such as an aspirating smoke detector can utilize various sensors related to its functionality that can produce data about various aspects of the aspirating smoke detector's operation. The data from the "physical" aspirating smoke detector can be provided to the digital twin model of the aspirating smoke detector, and the digital twin can then utilize such data to simulate operation of the physical aspirating smoke detector. Such an approach can be utilized to determine a remaining useful life of the filter, as is further described herein.

At 342, the computing device can convert a predefined computational fluid dynamics (CFD) model of the aspirating smoke detector into a reduced order model. The predefined CFD model may be a transient model (e.g., models results as operating conditions/variables change over time) and have been pre-created prior to the steps of the method 340. For example, the predefined CFD model may have been created during an engineering and/or design phase of the aspirating smoke detector device, and may have been utilized in order to test various performance aspects of the aspirating smoke detector. For example, the predefined CFD model may have been created to test performance of a filter of the aspirating smoke detector under different operational parameters and predict how the performance may change over time. For example, the predefined CFD model may simulate how well the filter functions under various flow rates and smoke particle concentrations, as well as how the filter efficiency changes over time. Such approaches may be utilized to avoid costly physical product testing. Since such predefined CFD models may utilize large amounts of processing power to run, the computing device can convert the predefined CFD model into a reduced order model. At 344, the computing device can generate a digital twin model of the aspirating smoke detector from the reduced order model of the aspirating smoke detector.

At 346, the computing device can calibrate the digital twin model using an initial data set including logged operational data of the aspirating smoke detector. Such logged operational data can include, for example, a flow rate of gas across/through the filter, a pressure differential over the filter, and/or any smoke particulate detected in the aspirating smoke detector. Such operational data can be utilized to determine percentage of flow resistance over the filter and can be utilized to predict a remaining useful life of the filter as is further described herein. Such operational data may be logged over a period of time, such as 7 days, among other examples.

Once the digital twin model is calibrated, at 348, the computing device can receive real-time operational data from the physical aspirated smoke detector in the facility. Such real-time operational data can include for example, a flow rate of gas across/through the filter, a pressure differential over the filter, and/or any smoke particulate detected in the aspirating smoke detector, similar to the logged operational data.

At 350, the computing device can run the calibrated digital twin model using the real-time operational data. For example, utilizing the flow rate of gas across the filter, the pressure differential over the filter, and/or any smoke particulate

(e.g., in parts per million (PPM)) detected in the physical aspirating smoke detector, the same data can be used in the calibrated digital twin model in order to determine a percentage of flow resistance based on the flow rate of gas across the filter, the pressure differential over the filter, and/or any smoke particles detected.

Accordingly, at 352, the computing device can determine the remaining useful life of the filter. For instance, the calibrated digital twin model can simulate the flow rate downstream of the filter based on the upstream flow rate of gas, the pressure differential over the filter, and any smoke particles detected to determine a percentage of flow resistance. The percentage of flow resistance is based on the flow rate of gas upstream of the filter, downstream of the filter, and the PPM of any detected smoke particles. The percentage of flow resistance can be utilized to determine real-time filter health of the filter of the aspirating smoke detector. For example, the computing device can determine, based on the real-time operational data using the calibrated digital twin model, the remaining useful life of the filter to be 80 days. Additionally, in some examples, the computing device can determine the remaining useful life of the filter to include a time range of remaining useful life of the filter (e.g., 70-90 days).

Additionally, as illustrated in Figure 3, the steps 350 and 352 of the method 340 may be repeated to determine a revised remaining useful life. For example, real-time operational data can change (e.g., due to changes in environmental conditions in the facility, degradation of the efficiency of the filter, etc.). As a result, the real-time operational data can also change. The computing device can run the calibrated digital twin model using the changed real-time operational data and again determine a remaining useful life of the filter. Such steps 350 and 352 may be continuously performed as real-time operational data is continuously received by the computing device from the aspirating smoke detector device. As a result, the computing device can determine, based on the continuously revised real-time operational data using the calibrated digital twin model, the remaining useful life of the filter to be 79 days, 78 days, etc.

In response to the remaining useful life exceeding a threshold amount, the computing device can generate an alert. For example, if the remaining useful life is determined to be 10 days (e.g., which exceeds a threshold amount of days of 15), the computing device can generate an alert. Such an alert may be transmitted to a control panel, to a peripheral device (e.g., a mobile device), etc. in order to notify a user to change the filter in the aspirating smoke detector.

As previously described in connection with Figure 2, the computing device may additionally and/or alternatively determine a remaining useful life of the filter using a machine learning model. To provide a robust and accurate remaining useful life determination of the filter, the computing device can provide results from both the remaining useful life determination via the machine learning model and the remaining useful life determination via the digital twin model. Such an approach can give equal priority to both approaches to assist a user on understanding remaining useful life of the filter and when to replace the filter. For example, the predicted remaining useful life determined from the machine learning model can be determined to be 12 days and the predicted remaining useful life determined from the digital twin model can be determined to be 10 days. The computing device can determine the average between the two to be 11 days, and such a predicted remaining useful life can be presented to the user for consideration on when to change the filter in the aspirating smoke detector device. Additionally, such results may converge/become more accurate as further iterations on the predicted remaining useful life are determined (e.g., via both the machine learning model and the digital twin model).

Accordingly, filter life prediction for an aspirating smoke detector according to the present disclosure can allow for optimization of the filter replacement process by reducing maintenance visits and/or inspection time of such filters. Additionally, such analysis can be performed in various locations (e.g., locally in the facility, on a cloud computing network, etc.) so that site visits to the facility to review filter life prediction can be reduced as compared with previous approaches. Further, such analysis can be continuously updated, providing more accurate predictions as more data is collected.

Figure 4 is an example of a computing device 402 for filter life prediction for an aspirating smoke detector, in accordance with one or more embodiments of the present disclosure. As illustrated in Figure 4, the computing device 402 can include a memory 462 and a processor 460 for filter life prediction for an aspirating smoke detector, in accordance with the present disclosure.

The memory 462 can be any type of storage medium that can be accessed by the processor 460 to perform various examples of the present disclosure. For example, the memory 462 can be a non-transitory computer readable medium having computer readable instructions (e.g., executable instructions/computer program instructions) stored thereon that are executable by the processor 460 for filter life prediction for an aspirating smoke detector in accordance with the present disclosure.

The memory 462 can be volatile or nonvolatile memory. The memory 462 can also be removable (e.g., portable) memory, or non-removable (e.g., internal) memory. For example, the memory 462 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 462 is illustrated as being located within computing device 402, embodiments of the present disclosure are not so limited. For example, memory 462 can also be located internal to another computing resource (e.g., enabling computer readable instructions to be downloaded over the Internet or another wired or wireless connection).

The processor 460 may be a central processing unit (CPU), a semiconductor-based microprocessor, and/or other hardware devices suitable for retrieval and execution of machine-readable instructions stored in the memory 462.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

## Claims

1. A computing device (102, 402) for filter life prediction for an aspirating smoke detector (108), comprising:

   a memory (462); and
   a processor (460) configured to execute executable instructions stored in the memory (462) to:

   log operational data of the aspirating smoke detector (108) for a first time period to generate an initial data set, wherein the aspirating smoke detector (108) includes a filter (112) and the operational data is light scattering data;
   fit a machine learning model to the initial data set;
   determine, based on the machine learning model, a remaining useful life of the filter (112);
   log additional operational data of the aspirating smoke detector (108) for a second time period;
   append the additional operational data to the initial data set to generate an appended data set;
   refit the machine learning model to the appended data set; and
   determine, based on the refit machine learning model, a revised remaining useful life of the filter (112).

2. The computing device (102, 402) of claim 1, wherein the second time period is shorter than the first time period.

3. The computing device (102, 402) of claim 1, wherein the machine learning model is a linear polynomial model.

4. The computing device (102, 402) of claim 3, wherein the processor (460) is configured to execute the instructions to determine a slope value of the linear polynomial model.

5. The computing device (102, 402) of claim 4, wherein the processor (460) is configured to execute the instructions to determine an error in the remaining useful life of the filter (112) determination using the slope value.

6. The computing device (102, 402) of claim 1, wherein the machine learning model is a quadratic polynomial model.

7. The computing device (102, 402) of claim 6, wherein the processor (460) is configured to execute the instructions to determine a constant value of the quadratic polynomial model.

8. The computing device (102, 402) of claim 7, wherein the processor (460) is configured to execute the instructions to determine an error in the remaining useful life of the filter (112) using the constant value.

9. The computing device (102, 402) of claim 1, wherein the computing device (102, 402) is a fire system gateway device.

10. A system for filter life prediction for an aspirating smoke detector (108), comprising:

an aspirating smoke detector (108), wherein the aspirating smoke detector (108) includes a filter (112) and a sensor (110) and wherein the sensor (110) is an optical sensor; and
a computing device (102, 402), wherein the computing device (102, 402) is configured to:

convert a predefined computational fluid dynamics, CFD, model of the aspirating smoke detector (108) into a reduced order model;
generate a digital twin model of the aspirating smoke detector (108) from the reduced order model of the aspirating smoke detector (108);
calibrate the digital twin model using an initial data set including logged operational data of the aspirating smoke detector (108);
receive, from the sensor (110), real-time operational data from the aspirating smoke detector (108); and
determine a remaining useful life of the filter (112) by running the calibrated digital twin model using the real-time operational data.

11. The system of claim 10, wherein the predefined CFD model is a transient model.

12. The system of claim 10, wherein the initial data set includes at least one of:

a flow rate of gas through the filter (112);
a pressure differential over the filter (112); and

smoke particulate detected in the aspirating smoke detector (108).

**Patentansprüche**

1. Berechnungsvorrichtung (102, 402) für eine Filterlebensdauerprognose für einen Ansaugrauchmelder (108), umfassend:

einen Speicher (462); und
einen Prozessor (460), der dazu konfiguriert ist, im Speicher (462) gespeicherte ausführbare Anweisungen auszuführen, um:

Betriebsdaten des Ansaugrauchmelders (108) für einen ersten Zeitraum zu protokollieren, um einen Anfangsdatensatz zu erzeugen, wobei der Ansaugrauchmelder (108) einen Filter (112) beinhaltet und die Betriebsdaten Lichtstreuungsdaten sind;
den Anfangsdatensatz mit einem Maschinenlernen-Modell auszurüsten;
auf Basis des Maschinenlernen-Modells eine verbleibende Nutzungslebensdauer des Filters (112) zu bestimmen;
zusätzliche Betriebsdaten des Ansaugrauchmelders (108) für einen zweiten Zeitraum zu protokollieren;
den Anfangsdatensatz, um die zusätzlichen Betriebsdaten zu ergänzen, um einen ergänzten Datensatz zu erzeugen;
den ergänzten Datensatz mit dem Maschinenlernen-Modell neu auszurüsten; und
auf Basis des neu ausgerüsteten Maschinenlernen-Modells eine überarbeitete verbleibende Nutzungslebensdauer des Filters (112) zu bestimmen.

2. Berechnungsvorrichtung (102, 402) nach Anspruch 1, wobei der zweite Zeitraum kürzer ist als der erste Zeitraum.

3. Berechnungsvorrichtung (102, 402) nach Anspruch 1, wobei das Maschinenlernen-Modell ein lineares Polynommodell ist.

**4.** Berechnungsvorrichtung (102, 402) nach Anspruch 3, wobei der Prozessor (460) dazu konfiguriert ist, die Anweisungen auszuführen, um einen Steigungswert des linearen Polynommodells zu bestimmen.

**5.** Berechnungsvorrichtung (102, 402) nach Anspruch 4, wobei der Prozessor (460) dazu konfiguriert ist, die Anweisungen auszuführen, um einen Fehler in der verbleibenden Nutzungslebensdauer des Filters (112) zu bestimmen, wobei die Bestimmung den Steigungswert verwendet.

**6.** Berechnungsvorrichtung (102, 402) nach Anspruch 1, wobei das Maschinenlernen-Modell ein quadratisches Polynommodell ist.

**7.** Berechnungsvorrichtung (102, 402) nach Anspruch 6, wobei der Prozessor (460) dazu konfiguriert ist, die Anweisungen auszuführen, um einen konstanten Wert des quadratischen Polynommodells zu bestimmen.

**8.** Berechnungsvorrichtung (102, 402) nach Anspruch 7, wobei der Prozessor (460) dazu konfiguriert ist, die Anweisungen auszuführen, um einen Fehler in der verbleibenden Nutzungslebensdauer des Filters (112) unter Verwendung des konstanten Werts zu bestimmen.

**9.** Berechnungsvorrichtung (102, 402) nach Anspruch 1, wobei die Berechnungsvorrichtung (102, 402) eine Feuersystem-Gateway-Vorrichtung ist.

**10.** System für eine Filterlebensdauerprognose für einen Ansaugrauchmelder (108), umfassend:

einen Ansaugrauchmelder (108), wobei der Ansaugrauchmelder (108) einen Filter (112) und einen Sensor (110) beinhaltet, und wobei der Sensor (110) ein optischer Sensor ist; und eine Berechnungsvorrichtung (102, 402), wobei die Berechnungsvorrichtung (102, 402) dazu konfiguriert ist:

ein vordefiniertes Numerische-Strömungsmechanik-, CFD-, Modell des Ansaugrauchmelders (108) in ein ordnungsreduziertes Modell umzuwandeln; ein digitales Zwillingsmodell des Ansaugrauchmelders (108) aus dem ordnungsreduzierten Modell des Ansaugrauchmelders (108) zu erzeugen; das digitale Zwillingsmodell unter Verwendung eines Anfangsdatensatzes, der protokollierte Betriebsdaten des Ansaugrauchmelders (108) beinhaltet, zu kalibrieren; von dem Sensor (110) Echtzeit-Betriebsdaten aus dem Ansaugrauchmelder (108) zu empfangen; und eine verbleibende Nutzungslebensdauer des Filters (112) durch Ablaufenlassen des kalibrierten digitalen Zwillingsmodells unter Verwendung der Echtzeit-Betriebsdaten zu bestimmen.

**11.** System nach Anspruch 10, wobei das vordefinierte CFD-Modell ein transientes Modell ist.

**12.** System nach Anspruch 10, wobei der Anfangsdatensatz mindestens eines aus Folgendem beinhaltet:

eine Durchflussrate von Gas durch den Filter (112); ein Druckdifferenzial über dem Filter (112); und

in dem Ansaugrauchmelder (108) erkannte Rauchpartikel.

**Revendications**

**1.** Dispositif informatique (102, 402) pour la prédiction de la durée de vie d'un filtre pour un détecteur de fumée par aspiration (108), comprenant :

une mémoire (462) ; et un processeur (460) configuré pour exécuter des instructions exécutables stockées dans la mémoire (462) pour :

enregistrer des données de fonctionnement du détecteur de fumée par aspiration (108) pendant une première période de temps pour générer un ensemble de données initial, dans lequel le détecteur de fumée par aspiration (108) inclut un filtre (112) et les données de fonctionnement sont des données de diffusion de lumière ; ajuster un modèle d'apprentissage automatique à l'ensemble de données initial ; déterminer, sur la base du modèle d'apprentissage automatique, une durée de vie utile restante du filtre (112) ; enregistrer des données de fonctionnement supplémentaires du détecteur de fumée par aspiration (108) pendant une deuxième période de temps ; ajouter les données de fonctionnement supplémentaires à l'ensemble de données initial afin de générer un ensemble de données complété ; réajuster le modèle d'apprentissage automatique à l'ensemble de données complété ; et déterminer, sur la base du modèle d'apprentissage automatique réajusté, une durée de vie utile restante révisée du filtre (112).

2. Dispositif informatique (102, 402) de la revendication 1, dans lequel la deuxième période de temps est plus courte que la première période de temps.

3. Dispositif informatique (102, 402) de la revendication 1, dans lequel le modèle d'apprentissage automatique est un modèle polynomial linéaire.

4. Dispositif informatique (102, 402) de la revendication 3, dans lequel le processeur (460) est configuré pour exécuter les instructions afin de déterminer une valeur de pente du modèle polynomial linéaire.

5. Dispositif informatique (102, 402) de la revendication 4, dans lequel le processeur (460) est configuré pour exécuter les instructions afin de déterminer une erreur dans la détermination de la durée de vie utile restante du filtre (112) à l'aide de la valeur de pente.

6. Dispositif informatique (102, 402) de la revendication 1, dans lequel le modèle d'apprentissage automatique est un modèle polynomial quadratique.

7. Dispositif informatique (102, 402) de la revendication 6, dans lequel le processeur (460) est configuré pour exécuter les instructions afin de déterminer une valeur constante du modèle polynomial quadratique.

8. Dispositif informatique (102, 402) de la revendication 7, dans lequel le processeur (460) est configuré pour exécuter les instructions afin de déterminer une erreur dans la durée de vie utile restante du filtre (112) à l'aide de la valeur constante.

9. Dispositif informatique (102, 402) de la revendication 1, dans lequel le dispositif informatique (102, 402) est un dispositif passerelle d'un système incendie.

10. Système pour la prédiction de la durée de vie d'un filtre pour un détecteur de fumée par aspiration (108), comprenant :

   un détecteur de fumée par aspiration (108), dans lequel le détecteur de fumée par aspiration (108) inclut un filtre (112) et un capteur (110), et dans lequel le capteur (110) est un capteur optique ; et
   un dispositif informatique (102, 402), dans lequel le dispositif informatique (102, 402) est configuré pour :

      convertir un modèle prédéfini de mécanique des fluides numériques, MFN, du détecteur de fumée par aspiration (108) en un modèle d'ordre réduit ;
générer un modèle de jumeau numérique du détecteur de fumée par aspiration (108) à partir du modèle d'ordre réduit du détecteur de fumée par aspiration (108) ;
calibrer le modèle de jumeau numérique à l'aide d'un ensemble de données initial incluant des données de fonctionnement enregistrées du détecteur de fumée par aspiration (108) ;
recevoir, depuis le capteur (110), des données de fonctionnement en temps réel issues du détecteur de fumée par aspiration (108) ; et
déterminer une durée de vie utile restante du filtre (112) en exécutant le modèle de jumeau numérique calibré à l'aide des données de fonctionnement en temps réel.

11. Système de la revendication 10, dans lequel le modèle MFN prédéfini est un modèle transitoire.

12. Système de la revendication 10, dans lequel l'ensemble de données initial inclut au moins l'un parmi :

   un débit de gaz à travers le filtre (112) ;
   un différentiel de pression au niveau du filtre (112) ; et

   des particules de fumée détectées dans le détecteur de fumée par aspiration (108).

100

104

REMOTE
COMPUTING
DEVICE

108

ASPIRATING SMOKE
DETECTOR

106

102 — COMPUTING
DEVICE

CONTROL PANEL

SENSOR | FILTER

110 | 112

# FIG. 1

220

222 — LOG OPERATIONAL DATA FOR A FIRST TIME PERIOD

224 — GENERATE AN INITIAL DATA SET

226 — FIT A MACHINE LEARNING MODEL TO THE INITIAL DATA SET

228 — DETERMINE A REMAINING USEFUL LIFE OF A FILTER

230 — LOG ADDITIONAL OPERATIONAL DATA FOR A SECOND TIME PERIOD

232 — APPEND THE ADDITIONAL OPERATIONAL DATA TO THE INITIAL DATA SET TO GENERATE AN APPENDED DATA SET

234 — REFIT THE MACHINE LEARNING MODEL TO THE APPENDED DATA SET

236 — DETERMINE A REVISED REMAINING USEFUL LIFE OF THE FILTER

FIG. 2

340 —

342 — CONVERT A CFD MODEL INTO A REDUCED ORDER MODEL

344 — GENERATE A DIGITAL TWIN MODEL FROM THE REDUCED ORDER MODEL

346 — CALIBRATE THE DIGITAL TWIN MODEL USING AN INITIAL DATA SET

348 — RECEIVE REAL-TIME OPERATIONAL DATA

RUN THE CALIBRATED DIGITAL TWIN MODEL USING THE REAL-TIME OPERATIONAL DATA — 350

DETERMINE A REMAINING USEFUL LIFE OF A FILTER — 352

# FIG. 3

FIG. 4

**EP 4 318 424 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007176783 A1